# EUROPEAN PATENT APPLICATION

(11) **EP 1 696 620 A1**
(43) Date of publication of application: **30.08.2006**
(21) Application number: 06250719.9
(22) Date of filing: 10.02.2006
(51) Int. Cl.: H04L 12/58, H04Q 9/00

(54) **Method of monitoring and controlling devices with instant messaging**

(30) Priority: 23.02.2005 CN 05151994
(71) Applicant: LUCENT TECHNOLOGIES INC., Murray Hill, New Jersey 07974-0636 (US)
(72) Inventor: Ma, Jun Tao, Hai dian Qu, Beijing (CN); Sun, Xiao Rong, Beijing (CN); Zhang, Peng, Hai dian district, Beijing (CN)
(74) Representative: Sarup, David Alexander

(57) **Abstract**

The present invention provides methods for controlling and/or monitoring at least one device using instant messages. In controlling at least one device, an instant messaging user may provide an instant message, which may include an operation to be performed. The instant messaging user may be informed of the performed operation via an instant message. In monitoring at least one device, a user may be informed of a status of the at least one device via an instant message.

## Description

This application claims priority under 35 U.S.C. §119 on Chinese Patent Application No. 200510051994.0, filed on February 23, 2005, in the Chinese Intellectual Property Office, the disclosure of which is incorporated by reference herein in its entirety.

### FIELD OF THE INVENTION

Example embodiments of the present invention relate to methods for monitoring and/or controlling devices.

### BACKGROUND OF THE INVENTION

Conventionally, users may set devices to perform desired operations at designated times. For example, a user may directly program a device, such as a VCR to record a television show airing on a weekday afternoon, while the user may be at work. The user may set the VCR to begin recording at the start time of the television program and stop recording at the end of the television program. The user may program the VCR, for example, hours, days, or months prior to the time the television program is to air.

Users may also directly program other devices such as an air conditioning (A/C) system within the residence. During the summer months, the cost to cool a home may become more costly as the outside temperature rises. Accordingly, users may desire to reduce the unnecessary use of the air conditioning system, for example, when the user may not be at home. Similar to directly programming the VCR, as discussed above, users may preset designated times for the air conditioning (A/C) system to turn on and/or turn off. For example, a user may leave for work at 9 AM every morning, and return home from work between 5 PM and 6 PM every evening. Accordingly, the user may directly program the air conditioning unit to turn off at 9 AM every morning, and turn on at 4:30 PM every afternoon. Accordingly, the air conditioning system may not be unnecessarily wasted when the user may not be at home, and the temperature may be comfortable when the user returns home from work.

However, in directly programming devices prior to leaving the home, a user may not be able to reprogram or adjust settings after leaving the home.

In an alternative, users may also utilize a conventional telephone and a conventional telephone service to remotely access devices within a residence. Through this remote access, a user may program devices by utilizing sequences of dual tone multi-frequency (DTMF) tones produced by pressing the numbers on the keypad of the conventional telephone. However, in remotely controlling devices the user may be not have the ability to reprogram and/or adjust settings until reaching a conventional telephone system.

In another alternative, users may directly program a device to respond to status changes. For example, a user may desire to maintain his/her home at a desired temperature, such as 72 degrees Fahrenheit. Subsequently, the user may set a thermostat within his/her home to 72 degrees. The thermostat may monitor the temperature within the residence and a climate control system may switch on and/or switch off based on the temperature on the thermostat relative to the programmed temperature at any given time. For example, if the temperature raises to 73 degrees, the climate control system may initiate the air conditioning system to switching on in order to lower the temperature. When the temperature on the thermostat reaches 72 degrees, the air conditioning system may switch off.

### SUMMARY OF THE INVENTION

The present invention relates to methods for monitoring and controlling a device or devices using instant messages.

In an example embodiment of the present invention, a user may control at least one device based on a first instant message sent from the user to a home instant messaging gateway. The instant message may include instructions regarding an operation to be performed. The user may be informed that the desired operation has been performed via a second instant message.

The first instant message may include a device or devices to be controlled and an operation or operations to be performed by the devices. For example, the operation, which may be performed may be an on/off operation.

In another example embodiment of the present invention, a user may be informed of a change in status of at least one device via an instant message. The informing may be based on instructions received from a user. For example, a second instant message may be generated, and may indicate a change in the status of the device. A user may then be informed of the change in status via the second instant message sent to the user. A user may also be informed of the change in status for more than one device via the second instant message.

Instructions sent via an instant message may be received at a home instant messaging gateway and may indicate a device to monitor. The home instant messaging gateway may inform the user of a change in status for the device based on the received instructions. Instructions including a type of change in status to monitor may be received from the user and the user may be informed of changes in status based on the type of change in status.

Instructions including a periodicity for receiving updates may be received from a user, and the user may be informed of the changes in status via periodic instant messages. The instructions regarding periodicity may include a time period for which to monitor the device or devices, and the user may be informed of the changes in status via an instant message at, for example, the end of the first time period.

The device or devices, which may be monitored and/or controlled using instant messages may be located at a residence.

### BRIEF DESCRIPTION OF THE DRAWINGS

Example embodiments of the present invention will become more fully understood from the detailed description given herein below and the accompanying drawings, wherein like elements are represented by like reference numerals, which are given by way of illustration only and thus are not limiting of the present invention and wherein:

FIG. 1 illustrates a system for instant messaging according to an example embodiment of the present invention;

FIG. 2 illustrates an example embodiment of a method performed by the home instant messaging gateway, as illustrated in FIG. 1;

FIG. 3 illustrates another example embodiment of a method performed by the home instant messaging gateway, as illustrated in FIG. 1; and

FIG. 4 illustrates another example embodiment of a method performed by the home instant messaging gateway, illustrated in FIG. 1.

### DETAILED DESCRIPTION OF THE EXAMPLE EMBODIMENTS

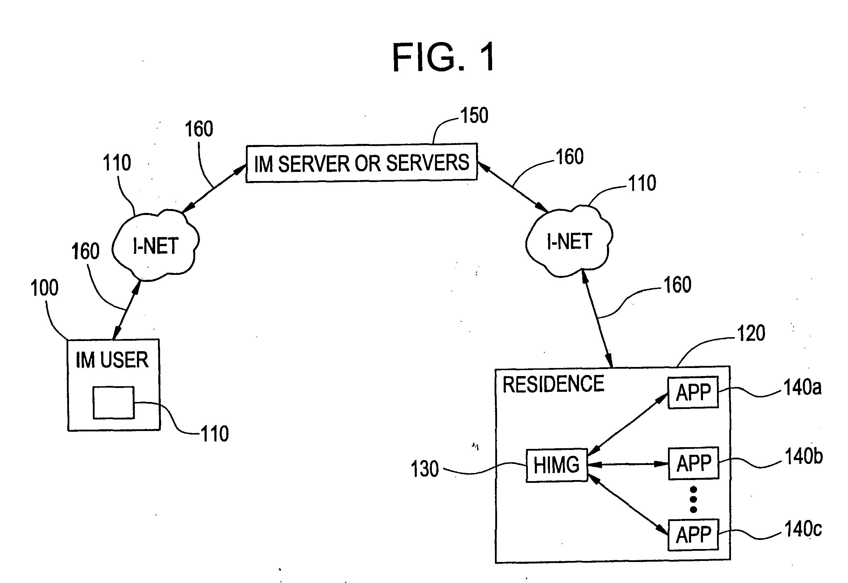

FIG. 1 illustrates an instant messaging system according to an example embodiment of the present invention. An instant messaging user 100 may use a client device 110 to send instant messages, via a communications connection 160, which may include an instant messenger and presence server or servers 150. Instant messaging, and components thereof, are well-known in the art.

Instant messaging (IM) communications may involve an instantaneous communication between two users. Each instant messaging user involved in the communication may transmit, receive and display communicated information. Instant messaging communications may involve the display of online presence information regarding other selected users. However, instant messaging communications may occur in the absence of online presence information.

An example of an instant messaging protocol, which may be used in connection with example embodiments of the present invention is given in the informational Request for Comments (RFC) 2778 entitled, "A Model for Presence and Instant Messaging", by M. Day, J. Rosenberg, and H. Sugano (The Internet Society, February 2000), and the informational Request for Comments (RFC) 2779, entitled "Instant Messaging/Presence Protocol Requirements", M. Day, S. Aggarwal, G. Mohr, and J. Vincent (The Internet Society, February 2000). Further, although any suitable instant messaging protocol may be used in connection with example embodiments of the present application, it is understood that instant messaging, as described herein, does not include, for example, the use of DTMF tones associated with conventional telephone services, conventional e-mail services, short messaging services (SMS), or conventional access via the internet.

Referring to FIG. 1, in an example embodiment of the present invention, instant messages may be delivered and exchanged data between an instant messaging user 100 and a home instant messaging gateway (HIMG) 130. The home instant messaging gateway 130 may be located within, for example, a residence 120. The instant messaging user 100 and the home instant messaging gateway 130 may be separated geographically, and may be connected with each other by networks, such as, one or more LANs ("Local Area Networks"), WANs ("Wide Area Networks"), wireless or Wi-Fi networks (e.g., using the IEEE 802.11b protocol), or any other suitable wireless or terrestrial network.

As discussed above, the instant messaging user 100 may use a client device 110 to send and receive instant messages. The client device 110 may include hardware components and software components. The client device 110 may be capable of establishing, for example, peer-to-peer communications. A software application may be loaded on the client device 110 for enabling communications initiated by the client device 110. The client device 110 may have an internal or external memory for storing data and programs such as an operating system and/or one or more client programs.

One or more application programs may be installed on the internal or external storage of the client device **110.** The client device 110 may further include, for example, lower-layered hardware devices for sending and receiving data, for example, a modem, a set-top box, a communication card, a satellite dish, etc. A client device 110 may also be a personal computer, or any other suitable device may operate as the client device 110. An example of a client device 110 may be a PDA including software for performing desired operations; however, other examples of suitable client device 110 may be a mobile phone. The mobile phone may include capabilities and may function in the same, or substantially the same, manner as the client device 110 by accessing a delivery network (e.g., a wireless delivery network).

As discussed above, the instant messaging user 100 may send instant messages to the home instant messaging gateway 130 via a communications connection 160. The communications connection 160 may be set up using, for example, the TCP/IP protocol and may include a delivery network and one or more instant messaging and presence servers 150, which may provide direct and/or indirect communication irrespective of physical separation. The one or more instant messaging and presence servers 150 may function to deal with instant messaging login/logoff operations, indicate an instant messaging user's presence on the instant messaging network, and receive and forward instant messages between the instant messaging users. Instant messaging and presence servers 150 may be located anywhere and may communicate with each other through, for example, one or more IP networks.

As discussed above, the home instant messaging gateway 130 may receive instant messages from the instant messaging user 100 via a communications connection 160. The home instant messaging gateway 130 may include hardware components and software components. Similar to the client device 110, the home instant messaging gateway 130 may be capable of establishing, for example, peer-to-peer communications. A software application may be loaded on the home instant messaging gateway 130 for enabling communications initiated by the home instant messaging gateway 130. The home instant messaging gateway 130 may have an internal or external memory for storing data and programs such as an operating system and/or one or more application programs. One or more application programs may be installed on the internal or external storage of the home instant messaging gateway 130. The home instant messaging gateway 130 may further include, be connected, or be in communication with, for example, a database and/or a computer readable medium. An example of a home instant messaging gateway 130 is a personal computer, or server, including software for performing desired operations.

The home instant messaging gateway 130 may be located within a residence 120, for example, a residential home. The residence 120 may include many devices, which may be controlled and/or monitored. The devices may be, for example, indoor appliances (e.g., washer/dryer, oven range, etc.), outdoor appliances (e.g., outer lights, garage door, etc.), climate control systems (e.g., heating ventilation and air conditioning system, etc.), security systems (e.g., an alarm system, etc.), or any other device connected to the home instant messaging gateway, which a user may desire to control. Although only devices 140a, 140b, and 140c are illustrated in FIG. 1, the home instant messaging gateway 130 may be connected to any number of devices. Accordingly, it will be understood that example embodiments of the present invention may be used to control any or all of the example devices. Further, it will be understood that the devices, which may be controlled by the home instant messaging gateway 130 are not limited to the example devices as described herein.

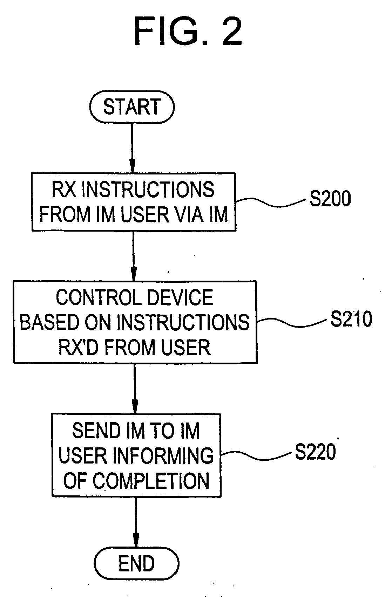

FIG. 2 illustrates an example embodiment of a method for controlling at least one device. An example-non-limiting embodiment of the present invention, as illustrated in FIG. 2, will be described with respect to the control of outdoor lights. However, it will be understood that the present invention should not be limited to the example-non-limiting embodiment as described herein.

At step S200, the home instant messaging gateway 130 may receive an instant message from the instant messaging user 100 including instructions for controlling the outdoor lights 140a at the residence **120.** The instant message may include, for example, a text string such as, "Turn outer lights on."

The home instant messaging gateway 130 may determine the instant messaging user 100 desires to turn on the outer lights 140a, at step S210, and the home instant messaging gateway 130 may turn on the outer lights 140a using, for example, a home networking protocol. An example of a suitable home networking protocol is the US standard CEBus protocol.

At step S220, the home instant messaging gateway 130 may send an update instant message to the instant messaging user 100 informing the instant messaging user 100 that the outer lights 140a have been turned on. For example, the home instant messaging gateway 130 may send an update instant message such as, "The outer lights have been switched on.", to the instant messaging user 100.

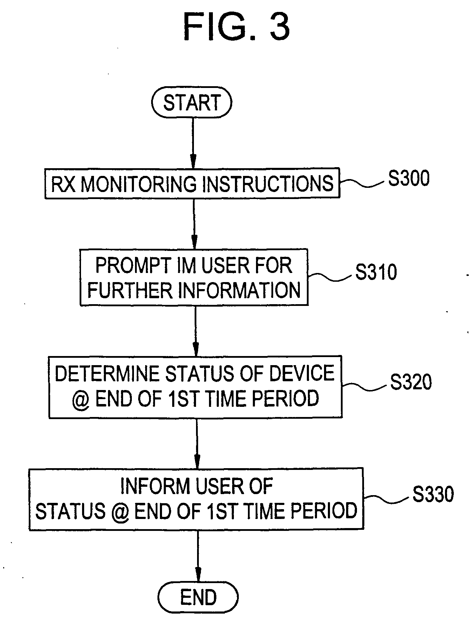

Referring back to FIG. 1, the home instant messaging gateway 130 may also monitor the status of at least one device, and send update instant messages to the instant messaging user 100 periodically. FIG. 3 illustrates an example embodiment of a method for monitoring at least one device, and periodically updating the instant messaging user 100. Although the home instant messaging gateway 130 may monitor any device inside or outside the residence, which may be connected, directly or indirectly, to the home instant messaging gateway 130, an example-non-limiting embodiment of the method as illustrated in FIG. 3 will be described herein with regard to monitoring of a climate control system 140b.

At step S300, the home instant messaging gateway 130 may receive monitoring instructions from the instant messaging user 100. The monitoring instructions may be similar to the controlling instructions as discussed above. For example, a text string such as "Monitor Temperature.", may be received by the home instant messaging gateway 130, in an instant message sent from the instant messaging user 100.

At step S310, the home instant messaging gateway 130 may prompt the instant messaging user 100 for, for example, a periodicity for the update instant messages to be sent to the instant messaging user 100. For example, after receiving the initial instant message from the instant messaging user 100, the home instant messaging gateway 130 may prompt the instant messaging user 100 for more information by generating a reply instant message. A reply instant message may include a text string such as, "Please enter periodicity for update instant messages regarding the temperature monitoring." In response, the instant messaging user 100 may send another instant message to the home instant messaging gateway 130, which may indicate the instant message user's desired periodicity for update instant messages. For example, the user may desire to receive update instant messages every hour. Subsequently, a reply instant message may include, for example, "Send instant message update every hour."

Referring back to FIG. 3, at step S320, after this time period has passed (e.g., one hour), the home instant messaging gateway 130 may read the current temperature from, for example, a conventional thermostat in the climate control system 140b. The home instant messaging gateway 130 may communicate with the climate control system 140b via a home networking protocol.

At step S330, the home instant messaging gateway 130 may send an update instant message to the instant messaging user 100 including the temperature on the thermostat at the end of the time period (e.g., one hour). An example of an update instant message sent from the home instant messaging gateway 130 to the instant messaging user 100 may be, "The current temperature is 72 degrees Fahrenheit." The home instant messaging gateway 130 may continue to monitor the temperature within the residence 120, for example, until instructions to stop monitoring the temperature may be received from the instant messaging user 100. An example of a stop instant message instructing the home instant messaging gateway 130 to stop monitoring the temperature may be, "Stop monitoring temperature." Although the example embodiment of the method for monitoring, as described above, has been discussed with respect to a start instant message and a stop instant message, in the alternative the instant messaging user 100 may set, for example, first and second time periods for receiving update instant messages from the home instant messaging gateway 130. For example, the instant messaging user 100 may send an instant message to the home instant messaging gateway 130 instructing the home instant messaging gateway 130 to send update instant messages every hour for six hours. In this case, the home instant messaging gateway 130 may send six update instant messages (i.e., an update instant message at the end of each hour) to the instant messaging user 100.

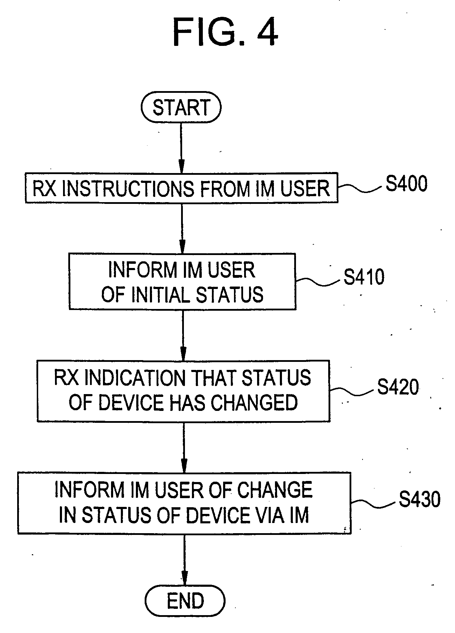

Again referring back to FIG. 1, the home instant messaging gateway 130 may also monitor at least one device and provide the instant messaging user 100 with event driven update instant messages. An event driven update instant message may occur anytime the status of the air conditioning system changes. A status of a device may be any operational characteristic of the device, for example, on/off status, functional status (i.e., is the device working properly), etc. FIG. 4 illustrates an example-non-limiting embodiment of a method for monitoring at least one device, and providing event driven update instant messages to the instant messaging user 100. As discussed above, although the home instant messaging gateway 130 may monitor any device inside or outside the residence which may be connected directly, or indirectly to the home instant messaging gateway 120, an example-non-limiting embodiment of the method as illustrated in FIG. 3 will be described herein with regard to an air conditioning system 140c within the residence 120.

In the example as described herein, the instant messaging user 100 may want to be notified each time the air conditioning system 140c within the residence 120 switches on or off. Although, for example purposes only one iteration will be discussed, it will be understood that event driven instant messages may be sent to the instant messaging user 100 in the same manner as discussed above with regard to FIGs. 2 and/or 3. For example, the instant messaging user 100 may desire to receive event driven update instant messages for a first time period (e.g., one hour). Accordingly, the home instant messaging gateway 130 may send event driven update instant messages to the instant messaging user for the first time period (e.g., one hour), after which the event driven update instant messages are discontinued.

Referring back to FIG. 4, at step S400, the home instant messaging gateway 130 may receive event driven monitoring instructions from the instant messaging user 100. The event driven monitoring instructions may be similar to the periodic monitoring instructions as discussed above with respect to FIG. 3. For example, an instant message including a text string such as "Monitor the on/off status of the air conditioning.", may be received by the home instant messaging gateway 130.

At step S410, the home instant messaging gateway 130 may subsequently determine an initial status of the air conditioning system 140c, and send an instant message to the instant messaging user 100 indicating such status. For example, the home instant messaging gateway 130 may send an instant message such as "The air conditioning is currently on.", to the instant messaging user 100.

At step S420, the home instant messaging gateway may determine that the air conditioning system 140c has switched off by monitoring the air conditioning system 140c via a home networking protocol. Accordingly, at step S430, the home instant messaging gateway 130 may send an event driven update instant message, indicating that the air conditioning system 140c has switched off, to the instant messaging user 100. An example of an event driven update instant message may be, "The air conditioning is now off. "

In example embodiments as illustrated in FIGs. 3 and 4, the instant message user 100 may receive periodic and/or event driven update instant messages regarding a device or devices (e.g., 140a - 140c) within the residence 120, which may be connected directly, or indirectly, to the home instant messaging 130. For example, the instant messaging user 100 may desire to receive periodic update instant messages regarding several, or all, of the devices (e.g., 140a-140c) within the residence 120. In the alternative, the instant messaging user 100 may desire to receive event driven update instant messages regarding several, or all, of the on/off status changes for several, or all, of the devices (140a-140c) directly, or indirectly, connected to the home instant messaging gateway 130.

In another alternative, the instant messaging user 100 may desire to receive periodic event driven update instant messages regarding on/off status changes of several, or all, of the devices (e.g., 140a-140c) connected to the home instant messaging gateway 130. In this case, the home instant messaging gateway 130 may send event driven update instant messages periodically. The event drive instant messages indicate several, or all, of the on/off status changes of several, or all, of the devices (e.g., 140a-140c) connected to the home instant messaging gateway 130, which may have occurred within a specified time period (e.g., one hour, six hours, one day, etc.). It will be understood that the instant messaging user 100 may use the type of device (e.g., outdoor appliances, indoor appliances, etc.), and/or the type of update (e.g., event driven, periodic, etc.) alone or in combination with one another to indicate the time at which the instant messaging user 100 may receive updates.

As described above, the example embodiments of the present invention may provide the instant messaging user 100 with the ability to control various devices within the residence 120 via instant messaging services from while not at home.

Although example embodiments of the present invention have been described with respect to a residence 120, it will be understood that the residence 120 could be any suitable location. For example, the residence 120 may be a residential home, a commercial business, etc.

Although example embodiments of the present invention have been described with respect to outer lights, a climate control system, and an air conditioning system, it will be understood that example embodiments may be used to control and/or monitor any or all of the devices as described herein. However, example embodiments should not be limited to those devices.

Example embodiments of the present invention have been discussed with regard to instant messaging and instant messages. However, it will be understood that the term instant messaging, as used herein, may be construed as presence and/or instant messaging, and the term instant messages, as used herein, may be construed as presence and/or instant messages.

Example embodiments of the present invention have been described with regard to monitoring instructions received from the instant messaging user 100. However, in example embodiments of the present invention, the home instant messaging gateway 130 may be directly programmed to provide the instant messaging user 100 with update instant messages in the same manner as described herein.

Example embodiments of the present invention being thus describe, would be obvious to one of ordinary skill in the art that the same may be varied in a variety of ways. Such variations are not to be regarded as a departure from the invention, and all such modifications are intended to be included within the scope of the invention.

## Claims

1. A method for controlling at least one device using instant messaging, the method comprising:
controlling the at least one device based on a first instant message from a user including instructions regarding an operation to be performed.

2. The method of claim 1 further comprising:
informing the user that the desired operation has been performed via a second instant message.

3. The method of claim 1, wherein the first instant message includes devices to be controlled and an operation to be performed by the devices.

4. The method of claim 1, further comprising:
informing the user of the operation performed by the devices via an instant message in response to the controlling step.

5. The method of claim 1, wherein the operation to be performed is an on/off operation.

6. A method for monitoring a status of at least one device using instant messaging, the method comprising:
informing a user of a status of at least one device via an instant message, based on instructions received from a user.

7. The method of claim 6, wherein the informing step further comprises:
generating a second instant message indicating a change in the status of the device; and
informing a user of the change in status by sending the second instant message to the user.

8. The method of claim 6, wherein the informing step informs a user of the change in status for more than one device within the residence via the second instant message.

9. The method of claim 6, further comprising:
receiving instructions from a user indicating a device to monitor; and
informing the user of an updated status for the device based on the received instructions.

10. The method of claim 6, further comprising:
receiving instructions from a user including a periodicity for receiving updates; and
informing the user of the status changes via periodic instant messages.
